Europäisches Patentamt

European Patent Office

Office européen des brevets

(11) Veröffentlichungsnummer: **0 374 709 B1**

(12) **EUROPÄISCHE PATENTSCHRIFT**

(45) Veröffentlichungstag der Patentschrift: **29.09.93**

(21) Anmeldenummer: **89123007.0**

(22) Anmeldetag: **13.12.89**

(51) Int. Cl.⁵: **C08F 2/10**, C08F 2/00, A61L 15/24, A61L 15/60

(54) **Verfahren zur kontinuierlichen Herstellung von flüssigkeitsabsorbierenden, vernetzten Polymeren.**

(30) Priorität: **20.12.88 AT 3090/88**

(43) Veröffentlichungstag der Anmeldung:
**27.06.90 Patentblatt 90/26**

(45) Bekanntmachung des Hinweises auf die
Patenterteilung:
**29.09.93 Patentblatt 93/39**

(84) Benannte Vertragsstaaten:
**AT BE CH DE ES FR GB GR IT LI LU NL SE**

(56) Entgegenhaltungen:
**EP-A- 0 022 339**

(73) Patentinhaber: **Chemie Linz Gesellschaft m.b.H.**
**St.Peter-Strasse 25**
**A-4021 Linz(AT)**

(72) Erfinder: **Pieh, Stefan, Dr.**
**Forsthausstrasse 39a**
**A-4060 Leonding(AT)**
Erfinder: **Willert, Gerhard**
**Bodendorf 52**
**A-4223 Katsdorf(AT)**
Erfinder: **Kloimstein, Engelbert**
**Schiferplatz 22**
**A-4070 Eferding(AT)**
Erfinder: **Haslauer, Gerold**
**Anastasius-Grün Strasse 20**
**A-4020 Linz(AT)**

(74) Vertreter: **Kunz, Ekkehard, Dr.**
**Chemie Holding AG Patentwesen St. Peter-Strasse 25**
**A-4021 Linz (AT)**

EP 0 374 709 B1

**Beschreibung**

Die Erfindung betrifft ein Verfahren zur kontinuierlich Herstellung von flüssigkeitsabsorbierenden, vernetzten Polymeren bei dem während der Polymerisation eine Trennflüssigkeit mitverwendet wird.

Flüssigkeitsabsorbierende Polymere, wie sie beispielsweise in der DE-OS 34 32 690 durch radikalische Lösungspolymerisation von Acrylmonomeren hergestellt werden, kommen vorwiegend für saugfähige Hygieneartikel, als Trocknungs-und Wasserrückhaltemittel sowie in der Landwirtschaft als Bodenverbesserungsmittel vor allem in Trockengebieten zum Einsatz.

Die Lösungspolymerisation von polaren Monomeren, wie z.B. Acrylsäure, Acrylamid oder deren Derivaten, führt in wäßriger Lösung sowohl ohne als auch mit Vernetzer realtiv schnell zu gelartigen bzw. elastisch-gelartigen Produkten. Bereits bei relativ niedrigen Monomer-Konzentrationen, beispielsweise von unter 10 %, bildet sich in einem meist radikalisch initiierten Reaktionsverlauf ein wassergequollenes, zähes bzw. zäh-elastisches Gel, das bei seiner Herstellung und Aufarbeitung Probleme aufwirft. Vor allem haftet der während der Polymerisation entstehende, einen einzigen Hydrogelkörper bildende Block durch Adhäsionskräfte an der Reaktorwand, wodurch seine Weiterförderung und Entnahme im Zuge einer kontinuierlichen Polymerisation erschwert bzw. verhindert wird. Besonders gefährlich sind dabei Durchbrüche von nachdrückender Monomerlösung infolge erzwungener Kanalbildung durch den festsitzenden Hydrogelblock. Dadurch wird einerseits ein uneinheitliches, mit Monomerlösung vermischtes, ungleichmäßig polymerisiertes und deshalb unbrauchbares Polymer erhalten, das als Abfall entsorgt werden muß. Andererseits erzwingt ein derartiger Durchbruch den Abbruch des Polymerisationsprozesses und erfordert ein erneutes arbeits-, kosten-, energie-und zeitintensives Anfahren der Polymerisation. Aus diesem Grund wird beispielsweise in der DE-AS 12 18 157 angeführt, daß die Polymerisation in wäßrigem Medium nur diskontinuierlich möglich ist. Die kontinuierliche Polymerisation erforderte bisher beträchtlichen zusätzlichen Aufwand, wie z.B. in der DE-OS 34 32 690 den Einbau von rotierenden Rührerwellen in den Reaktor. Auch in der DE-OS 35 37 276 wird ein Reaktor mit eingebauten, auf einer Welle angeordneten Kneter- und Förderelementen verwendet. Bei Verwendung derartiger Kneter-, Rühr- und Förderelemente ergibt sich allerdings der Nachteil, daß aufgrund der auftretenden Scherkräfte ein mechanisch stark degradiertes Produkt mit geringer Gelfestigkeit und Viskosität erhalten wird.

Die Aufgabe der Erfindung lag nun darin, ein Verfahren zu finden, bei dem diese Nachteile nicht auftreten und bei dem das im Verlauf der kontinuierlichen Polymerisation entstehende Hydrogel leicht im Reaktor weitertransportiert und ausgetragen werden kann, ohne daß es zum Ankleben und Festsitzen an der Reaktorwand, zu Monomerdurchbrüchen bzw. Abbaureaktionen kommt.

Die Aufgabe konnte dadurch gelöst werden, daß gleichzeitig mit der Zuführung der wässrigen Monomerlösung in den Reaktor auch eine mit dieser nicht oder teilweise mischbare Trennflüssigkeit zugeführt wird. Es ist dabei besonders überraschend, daß die Trennflüssigkeit im Verlauf der Polymerisation an die Reaktorwand wandert und dort eine Trenn- und Gleitschicht zwischen Reaktorwand und Polymerblock bildet. Dadurch wird ein freies Gleiten des Polymerblockes an der Reaktorwand, ohne Kleben oder Festsitzen und damit auch ein leichter Austrag des Polymerblockes aus dem Reaktor ermöglicht.

Gegenstand der vorliegenden Erfindung ist demnach ein Verfahren zur kontinuierlichen Herstellung von flüssigkeitsbsorbierenden, vernetzten, wasserunlöslichen Polymeren durch Polymerisation von wasserlöslichen Monomeren, die eine oder mehrere Doppelbindungen enthalten, oder von deren Gemischen, das dadurch gekennzeichnet ist, daß einem Reaktor gleichzeitig mit einer wäßrigen Lösung der Monomeren eine mit dieser Lösung unmischbare bzw. teilweise mischbare Trennflüssigkeit am Reaktoreingang zugeführt wird, wobei sich die Trennflüsigkeit im Verlauf der Polymerisation selbständig zwischen Reaktorinnenwand und Polymerphase verteilt, und die entstandenen Polymeren gemeinsam mit der Trennflüssigkeit am Reaktorausgang ausgetragen werden.

Als wasserlösliche Monomere mit einer Doppelbindung können beispielsweise Monomere aus der Gruppe der monofunktionellen Vinyl- oder Acrylmonomeren, beispielsweise Vinylpyrrolidon, Acrylsäureamide oder Methacrylsäureamide ((Meth)acrylsäureamide) wie z.B. (Meth)acrylamid, N-Alkyl ($C_1$-$C_4$) und N-Dialkyl ($C_1$-$C_4$) (meth)acrylamide wie z.B. N-Methyl (meth)acrylamid, N,N'Dimethyl(meth)acrylamid, N-tert Butyl-(meth)-acrylamid, N-Butyl(meth)acrylamid, N,N'-Dimethyl(meth)acrylamid, Aminoalkyl ($C_1$-$C_4$) (meth)acrylamide in ihrer neutralen bzw. in ihrer quarternisierten Form wie z.B. Dimethylaminomethyl(meth)acrylamid, Dimethylaminoethyl(meth)acrylamid, Trimethylammoniumpropyl(meth)acrylamidochlorid, (Meth)acrylsäure und deren Alkali-und Ammoniumsalze, und (Meth)acrylsäurehydroxyalkylester ($C_1$-$C_4$) wie z.B. Hydroxyethyl(meth)acrylat, Hydroxypropyl(meth)acrylat, (Meth)acrylsäureaminoalkylester in ihrer neutralen bzw. in ihrer quarternisierten Form wie z.B. Dimethylaminoethyl(meth)acrylat, Dimethylaminopropyl(meth)-acrylat, Trimethylammoniummethyl(meth)acryloylmethylsulfat, Dimethylammoniumalkyl(meth)-acryloylchlorid, Sulfonsäuren wie Vinylsulfonsäure, Acrylamidomethylpropansulfonsäure, Sulfoethyl(meth)-

2

acrylat und deren wasserlösliche Salze verwendet werden. Bevorzugt sind Acrylsäure und deren Salze sowie Acrylsäurederivate und deren Salze.

Diese Monomeren mit einer Doppelbindung werden zumeist Monomere mit zwei oder mehreren Doppelbindungen als Vernetzer zugesetzt, üblicherweise in Mengen von 0,01 bis 1 Mol %, bezogen auf die Gesamtmenge an Monomeren. Es ist jedoch auch möglich, die bi- oder mehrfunktionellen Monomere für sich allein zu polymerisieren. Beispiele für bi- oder mehrfunktionelle Monomere sind N,N′-$C_1$-$C_6$-alkylene oder $C_6$-acrylenbisacryl- oder -bismethacrylverbindungen wie z.B. N,N′-Methylen-bis(meth)acrylamid, N,N′-Ethylenbis(meth)acrylamid, N,N′-Propylenbis(meth)acrylamid, $C_2$-$C_6$-alkylene-bisacrylate oder -bismethacrylate wie z.B. Ethylenebis(meth)acrylat, Propylenbis(meth)acrylate, Di-, Tri- und Tetraallylverbindungen wie z.B. Diallylmaleinat, Diallyltartrat, Tetrallyloxyethan, Allylvinylverbindungen wie z. B. Allylvinylmaleat, Allylacrylat, Allylmethacrylat, Allyl(meth)acrylamid, Polyalkylglycolbisacrylate oder Bismethylacrylate wie z.B. Diethylenglycolbis(meth)acrylat, Triethylenglycolbis(meth)acrylat, Tetraethylenglycolbis(meth)-acrylat, Trimethylolpropandi- un triacrylat, Glycerindi-und triacrylat, Divinylether wie z.B. Polyethylenglycoldivinylether, Diethylenglycoldivinylether, Glycidylether wie z. B. Bisphenoldiglycidylether.

Als Trennflüssigkeiten eignen sich alle mit Wasser nicht bzw. teilweise mischbaren flüssigen Verbindungen, bzw. Lösungen von festen Verbindungen in mit Wasser nicht bzw. teilweise mischbaren organischen Lösungsmitteln, beispielsweise nichtionogene Tenside. Bevorzugt werden Flüssigkeiten bzw. Lösungen eingesetzt, die mit Wasser nicht mischbar sind. Besonderes geeignet als Trennflüssigkeiten erweisen sich Verbindungen mit einem HLB-Wert (hydrophile-lipophile balance) von maximal 17. Der HLB-Wert gestattet die Einordnung von grenzflächenaktiven Stoffen bezüglich ihrer hydrophilen und lipophilen Eigenschaften, wobei ein niederer HLB-Wert start lipophile und ein hoher HLB-Wert stark hydrophile Eigenschaften charakterisiert. Die Bestimmung des HLB-Wertes kann beispielsweise gemäß Kirk-Othmer, Encyclopedia of Chemical Technology, Vol. 8, 3. ed., Seite 910 -917 oder Ullmanns Enzyklopädie der Technischen Chemie, Band 22,4. Aufl., Seite 488 -490 erfolgen.

Als Trennflüssigkeiten können beispielsweise Polyalkylenoxide, Fettsäureester, Harzsäureester, Fettsäureamide Fettsäurehydroxylamine, Polyalkylenoxid-Blockcopolymere, Silicone und Wachse verwendet werden. Beispiele für Polyalkylenoxide sind Alkoholethoxylate wie z. B. Diethylenglycolmonolaurat (HLB 6,5) und Polyethylenglycoldilaurat (HLB 6,3); Alkylphenolethoxylate wie z. B. Nonylphenolethoxylate mit 4 bis 25 Ethylenoxideinheiten (HLB 7,5 - 17; Arkopal® N-40 bis N-250 von Hoechst); Octylphenolethoxylate (HLB 7,8) und Polyalkylenglycole. Beispiele für Fett- und Harzsäureester sind Polyethylenoxidfettsäureester bzw. Polyethylenoxidabietinsäureester wie z. B: Polyethylenoxidstearinsäuremonoester (HLB 8); Glycerinfettsäureester bzw. Öle und Fette bzw. Mono-und Diglyceride wie z. B.: Glycerinmonostearat (HLB 3,8); Sorbitan bzw. Isosorbit-Fettsäureester wie z. B: Sorbitanmonostearat (HLB 4,7), Sorbitanmonopalmitat (HLB 6,7); ethoxylierte Sorbitan- bzw. Isosorbitan-Fettsäureester wie z. B.: Polyethylenoxidsorbitanmonooleat (HLB 10); ethoxylierte natürliche Fette bzw. Öle bzw. Wachse wie z. B.: Polyethylenoxid-Pflanzölester (HLB 13,3); Fettsäureglycolester bzw. Fettsäurediethylenglycolester bzw. Fettsäurepolyethylenglycolester wie z. B.: Propylenglycolmonostearat (HLB 3,4); Fettsäurealkylester wie z. B. Butylstearat und Butyloleat. Beispiele für Fettsäureamide bzw. Fettsäure-Hydroxylamine sind Monoethanolamin- bzw. Diethanolaminkondensate wie z. B: Triethanolaminoleat (HLB 12); Polyethylenoxidfettsäureamide wie z. B. Polyethylenoxidfettsäureamid (HLB 13,9). Beispiele für Polyalkylenoxid-Blockcopolymere sind Polyethylenoxid-Polypropylenoxid-Copolymere wie z. B. Pluronic® 10500 (BASF). Beispiele für Silicon bzw. Siloconöle sind z. B.: Polydimethylsiloxane. Beispiele für Wachse sind z. B.: Fischer-Tropsch-Hartparaffine, Mikrowachse, Säure- und Esterwachse.

Besonders bevorzugt werden Butylstearat, Butyloleat oder Siliconöle als Trennflüssigkeiten verwendet.

Die Menge der eingesetzten Trennflüssigkeit liegt etwa im Bereich von 0,001 bis 1 Gew.%, bezogen auf das Gewicht der eingesetzten Monomerlösung. Bevorzugt setzt man etwa 0,01 bis 0,8 Gew. % Trennflüssigkeit ein.

Zum Start der Polymerisation werden übliche Initiatoren, beispielsweise anorganische oder organische Peroxidinitiatoren oder Azoverbindungen verwendet. Beispiele für anorganische Peroxidinitiatoren sind Alkalimetallpersulfate oder Ammoniumpersulfat, gegebenenfalls als Redoxiinitiatoren in Kombination mit einem Reduktionsmittel, wie z. B. Ammoniumbisulfit. Als organischer Peroxidinitiator kann beispielsweise tert-Butylhydroperoxid, als Azoverbindungen 4,4′-azobis(4-cyanovaleriansäure) oder 2,2′-Azobis(2-amidinopropan)hydrochlorid eingesetzt werden. Die Initiatoren können allein oder in Mischung verwendet werden. Besonders bevorzugt ist ein Redoxinitiator, bestehend aus Ammoniumpursulfat und Natriumhydrogensulfit sowie Azoverbindungen, z.B. 2,2′-Azobis(2-amidinopropan)hydrochlorid. Diese Polymerisationsinitiatoren werden vorzugsweise in Form von wäßrigen Lösungen verwendet. Sie können aber auch verdünnt mit einem geeigneten Lösungsmittel eingesetzt werden. Die Menge des Initiators liegt bei etwa 0,001 bis 5 Gew. %, vorzugsweise bei etwa 0,003 bis 2 Gew.% als Feststoff, bezogen auf die Gesamtmenge der eingesetzten Monomeren.

Die Polymerisation kann in stehenden oder liegenden Reaktoren erfolgen, die vorzugsweise einen zylindrischen Querschnitt aufweisen und vorzugsweise an der Innenwand mit Kunststoffen, beispielsweise mit Polyolfinen, wie z.B. Polyethylen oder Polypropylen, fluorierten Polyolefinen, Polyester oder Polyvinylverbindungen wie z.B. PVC oder Polymethylmethacrylat ausgekleidet sind. Der Reaktorinnendurchmesser liegt bevorzugt bei etwa 10 bis 500 mm.

Zur Herstellung der erfindungsgemäßen Polymere werden Monomerlösung, Polymerisationsinitiator, Trennflüssigkeit und gegebenenfalls weitere übliche Zusätze an einem Ende des Reaktors, der zuerst beispielsweise mit N$_2$ sauerstofffrei gespült wurde, aufgegeben. Der Reaktor steht auch während der Polymerisation unter Inertgasatmosphäre. Beim Durchgang durch den Reaktor polymerisiert die Lösung unter Wärmeentwicklung zu einem hochviskosen, gelartigen Polymerblock. Die Reaktion wird weitestgehend adiabatisch geführt, wobei die Temperatur im Reaktor aufgrund der freiwerdenden Polymerisationswärme ansteigt und die Polymerisation in Abhängigkeit von verwendetem Monomer, von der Monomerkonzentration und vom Initatorsystem in einem Temperaturbereich von etwa -10 ° bis + 120 °C erfolgt. Die Anfangstemperatur liegt bevorzugt zwischen 0 und 40 °C, die Monomerkonzentration im Bereich von etwa 2 bis 50 Gew. %, besonders bevorzugt bei 15 bis 50 Gew. %.

Im Verlauf der Polymerbildung wandert die Trennflüssigkeit an die Reaktorwand, wo sie sich verteilt und einen Film zwischen Reaktorinnenwand und dem gelartigen Polymerblock bildet, an dem der Polymerblock ohne nennenswerte Reibung zum Reaktorausgang gleitet. Durch Auswahl einer geeigneten Trennflüssigkeit in Abhängigkeit von den Verfahrensbedingungen, von der Art des Polymeren, der Konstruktion, Lage und Innenauskleidung des Reaktors kann eine weitereOptimierung der Gleitverhältnisse erreicht werden. Der Transport des Polymerblocks zum Reaktorausgang erfolgt entweder mittels Schwerkraft durch dessen Eigengewicht oder durch Druck am Reaktoreingang, beispielsweise durch den Druck, mit dem die Ausgangsstoffe in den Reaktor gepumpt werden, oder durch einen Überdruck des Inertgases. Der Transport mittels Pumpendrucks bzw. Gasdrucks erfolgt vor allem bei liegenden Reaktoren sowie in stehenden Reaktoren bei einer Reaktionsführung von unten nach oben.

Bevorzugt wird ein senkrecht stehender, zylindrischer Rohrreaktor eingesetzt, bei dem Monomerlösung, Initiator und Trennflüssigkeit an dessen oberem Ende, beispielsweise mittels Pumpen kontinuierlich eingespeist werden.

Während des Durchganges durch den Reaktor polymerisieren die Monomeren zu einem hochviskosen, gelartigen Polymerblock, wobei sich die Trennflüssigkeit zwischen Reaktorinnenwand und Polymerblock zu einem Gleitfilm verteilt, an dem der Polymerblock entlang gleitet und am Ende des Reaktors kontinuierlich, beispielsweise mit Hilfe eines Walzenpaares, abgezogen wird. Der gelartige, an Gleitfilm und Reaktorwand gleitende Polymerblock sichert dabei gleichzeitig die Abdichtung des Reaktors nach außen und verhindert den Durchbruch von Monomeren und von niedrigviskosen, noch nicht auspolymerisierten Oligomeren auf der Produktseite des Reaktors. Die Trennflüssigkeit wird gleichzeitig mit dem Polymeren ausgetragen. Bei Verwendung eines stehenden Reaktors mit einem größeren Innendurchmesser als etwa 100 mm gleitet der Polymerblock unter seinem Eigengewicht nach unten.

Die Verweilzeit beim Durchgang durch den Reaktor liegt in Abhängigkeit vom Monomer, vom Initiator und der Temperatur überlicherweise zwischen 15 und 180 Minuten, wobei ein Umsatz von mindestens 90 % erreicht wird. Die Durchgangsgeschwindigkeit durch den Reaktor liegt im allgemeinen in einem Bereich von etwa 1 bis 32 m/h, wobei auch bei höheren Geschwindigkeiten keine Beeinträchtigung der erfinderischen Vorteile, insbesondere der Verteilung der Trennflüssigkeit an die Grenzfläche zwischen Reaktorinnenwand und Polymergel, verbunden mit einem problemlosen Transport des Polymerblocks, erfolgt.

Beispiel 1:

Herstellung der Monomerlösung

In einem 800 Liter Rührkessel mit pH-Meßeinrichtung, Thermometer und Stickstoffeinleitrohr wurden 226 kg einer 50 %igen wäßrigen Acrylamidlösung (AA), 86,6 kg einer 50 %igen wäßrigen Lösung von Acrylamidomethylpropansulfonsäure-Kalium (AMPS-K), 37,97 g Methylenbisacrylamid (MBA) und 28,35 g Trilon C$^R$ (Ethylendiamintetraessigsäure, BASF) vorgelegt, mit 275 kg vollentsalztem Wasser versetzt und unter Rühren bei Raumtemperatur homogenisiert. Anschließend wurde der pH-Wert mit HCl 1 : 1 auf 4,9 gestellt und der Rührkessel mit Stickstoff gespült. Die Monomerkonzentration lag bei 26,5 %.

4

Herstellung der Initiatorlösung

In einem 2 Liter Vorlagegefäß wurden 1500 ml Wasser vorgelegt, mit 27,16 g Azobis(2amidinopropan)-hydrochlorid (V-50® von Fa. Wako, Japan) versetzt und homogenisiert. Anschließend wurden 0,87 g Natriumbisulfit, gelöst in 250 ml Wasser und 1,76 g Ammoniumperoxodisulfat, gelöst in 250 ml Wasser zugegeben und die Lösung homogenisiert.

Polymerisation

Die Polymerisation erfolgte in einem vertikalen, teflonbeschichteten Metallrohr mit 200 mm Durchmesser und 4 m Höhe. Die Monomerlösung (60 kg/h) und die Initiatorlösung (2,4 kg/h) wurden durch tangentiales Einspritzen in einem Mischkopf homogen gemischt und kontinuierlich dem Reaktor zugeführt. Die Trennflüssigkeit (2,2 ml/h Butylstearat, entsprechend einer Menge von 0,0036 Gew. %, bezogen auf die eingesetzte Monomerlösung) wurde über ein Einleitrohr am Reaktorkopf zudosiert. Über ein weiteres Einleitrohr sowie ein Ableitrohr wurde Stickstoff in den Reaktor geleitet.

In der Anfangsphase wurde der Reaktor an der Unterseite mit einer Blindscheibe verschlossen und nach Beginn der Polymerisation wieder geöffnet. Dadurch konnte das entstandene gummiartige, leicht verformbare Polymerisat am Boden des Reaktors, mit einer Walze abgestützt, leicht herausgeführt werden.

Im Verlauf der Polymerisation stieg die Viskosität der Lösung nach einer Induktionphase rasch an.

Durch im Reaktor angebrachte Meßstellen wurde folgender Temperaturverlauf angezeigt:

| | | |
|---|---|---|
| 0 m | vom Mischkopf | 20 °C |
| 0,5 m | " | 21 °C |
| 1 m | " | 56 °C |
| 1,5 m | " | 72 °C |
| 2 m | " | 80 °C |
| 2,5 m | " | 80 °C |
| 4 m | " | 80 °C |

Die Verweilzeit im reaktor betrug 2 Stunden. Es wurden 62,4 kg/h Polymer mit einer Temperatur von 80 °C kontinuierlich ausgetragen.

Vergleichsbeispiel V1

Die Polymerisation® wurde analog zu Beispiel 1 durchgeführt, mit dem Unterschied, daß keine Trennflüssigkeit zugesetzt wurde.

Nach dem Start der Polymerisation und Öffnen der Blindscheibe mußte das Polymer unter Kraftanwendung abgezogen werden. Durch das Fehlen der Trennflüssigkeit efolgte eine ungleichmäßige Austragung des Gels, wobei auch eine Dehnung und Deformierung des Gels beobachtet wurde. Dadurch bedingt konnte die Monomerlösung an der Grenzfläche zwischen Gel und Wand durchfließen. Nach 1-stündiger Austragung erfolgte der Durchbruch von niederviskoser Monomerlösung am Boden des Reaktors, worauf die Polymerisation abgebrochen werden mußte.

Beispiel 2 bis 12

Analog zu Beispiel 1 wurde ein Polymergel hergestellt, mit dem Unterschied, daß während der Polymerisation die in Tabelle 1 angeführten Trennflüssigkeiten und Innenbeschichtungen des Rohrreaktors verwendet wurden.

Tabelle 1:

| Beispiel | Trennflüssigkeit | Reaktorbeschichtung | Austragung |
|----------|------------------|---------------------|------------|
| 1 | 0,0036 Gew.% Butylstearat | Teflon | + |
| 2 | 0,7 Gew.% Butylstearat | Polyethylen | + |
| 3 | - | Polyethylen | - |
| 4 | 0,4 Gew.% Butylstearat | Polypropylen | + |
| 5 | - | Polypropylen | - |
| 6 | 0,8 Gew.%Butylstearat | PVC | + |
| 7 | - | PVC | - |
| 8 | 0,8 Gew.% Butylstearat | Polymethylmethacrylat | + |
| 9 | - | Polymethylmethacrylat | - |
| 10 | 0,8 Gew.% Isododecanolethoxylat | Teflon | + |
| 11 | 0,8 Gew.% Nonylphenolethoxylat | Teflon | + |
| 12 | 0,2 Gew.% Dimethylpolysiloxan* | Polypropylen | + |

+ gleichmäßiger Gelaustritt am Boden des Reaktors aufgrund des Eigengewichtes, kein Ankleben an der Reaktorwand.

- Produkt bleibt infolge der hohen Adhesionskräfte im Reaktor kleben und kann ohne äußere Kraftanwendung (z.B. Zug oder Druck) nicht aus dem zylindrischen Reaktor entfernt werden, ungleichmäßiger Produktstrom.

* Tegeloxan® 100, T.H.Goldschmidt

**Beispiele 13 und 14**

Analog zu Beispiel 1 wurde ein Polymergel hergestellt, wobei jedoch 0,8 Gew.% Nonylphenolethoxylat als Trennflüssigkeit, sowie die in Tabelle 2 angeführten Monomerkonzentrationen verwendet wurden. Weiters sind in Tabelle 2 die Initiatormenge, Starttemperatur und Veweilzeit im Reaktor angegeben. Die Austragung des Polymergels erfolgte problemlos, das Polymergel klebte nicht an der Reaktorinnenwand.

Tabelle 2:

| Beispiel | Monomer | | Initiator | Starttemperatur | Verweilzeit | Austragung |
|----------|---------|------|-----------|-----------------|-------------|------------|
| | (Gew.%) | (kg/h) | (kg/h) | | | |
| 1 | 26,5 | 60 | 2,4 | 20°C | 2 h | + |
| 13 | 35 | 45 | 1,8 | 2°C | 3 h | + |
| 14 | 26,5 | 240 | 9,6 | 40°C | 0,5 h | + |

**Beispiel 15 bis 21**

Analog zu Beispiel 1 wurde ein Polymergel hergestellt, wobei jedoch 0,1 Gew.% Butylstearat als Trennflüssigkeit, sowie die in Tabelle 3 angeführten Monomere verwendet wurden. Die Mengen der Monomeren sind in Mol %, bezogen auf die Gesamtmenge an Monomeren mit einer Doppelbindung, die Mengen der Initiatoren in Mol Initiator pro 1 Million Mole Monomer (mpmm) angegeben. Weiters ist in Tabelle 3 die Absorptionskapazität der erhaltenen Polymere angeführt. Die Messung der Absorptionskapazität erfolgte durch Einstreuen von 1 g eines während 48 h bei 40°C im Trockenschrank getrockneten Polymeren in eine 0,9 %ige wäßrige NaCl-Lösung und Bestimmung des Gewichtes des gequollenen Polymergels nach vollständiger Quellung und Abtropfen auf einem Sieb während 25 Minuten.

6

Die erhaltenen Polymere klebten im Reaktor nicht an und konnten problemlos ausgetragen werden.

### Tabelle 3:

Monomere

| Beisp. | AA | AMPS-K | AS | AS-Na | MBA | TAT | VP | DMM-HCl | Sonst. |
|--------|-----|--------|-----|-------|-------|------|-----|---------|--------|
| 1 | 90 | 10 | - | - | 0,014 | - | | - | - |
| 15 | - | 25 | 75 | - | - | 0,06 | - | - | 1 DAA |
| 16 | 50 | - | - | - | 0,16 | - | - | 50 | - |
| 17 | 90 | - | 5 | - | 0,014 | - | - | - | 5 DMM |
| 18 | 90 | 10 | - | - | 1,00 | - | - | - | - |
| 19 | 70 | - | - | 30 | 0,1 | - | - | - | - |
| 20 | 90 | - | - | - | 0,04 | - | - | 10 | - |
| 21 | - | - | - | 90 | 0,014 | - | 10 | - | - |

| Beisp. | Initiatoren (mpmm) | | | Absorptions-kapazität (g/g) |
|--------|------|---------|--------|-----|
| | V-50 | Peroxid | Sulfit | |
| 1 | 641 | 49,3 | 29,6 | 50 |
| 15 | 320 | 740 | 444 | 38 |
| 16 | 641 | 493 | 296 | 29 |
| 17 | 641 | 98,6 | 59,2 | 30 |
| 18 | 641 | 49,3 | 29,6 | 19 |
| 19 | 641 | 147,9 | 78,8 | 49 |
| 20 | 641 | 148 | 79 | 30 |
| 21 | 641 | 988 | 592 | 45 |

Für die Monomeren wurden in Tabelle 3 folgende Abkürzungen verwendet:

| | |
|--------|--------------------------------------------|
| AA | Acrylamid |
| AMPS-K | Acrylamidomethylpropansulfonsäure-Kalium |
| AS | Acrylsäure |
| AS-Na | Na-Acrylat |
| MBA | Methylenbisacrylamid |
| TAT | Tris-Acryloylperhydro-s-triazin |

VP        Vinylpyrrolidon
DAA       Diacetonacrylamid
DMM       Dimethylaminoethylmethacrylat
DMM-HCl   Dimethylaminoethylmethacrylat-hydrochlorid

**Patentansprüche**

1. Verfahren zur kontinuierlichen Herstellung von flüssigkeitsabsorbierenden, vernetzten, wasserunlöslichen Polymeren durch Polymerisation von wasserlöslichen Monomeren, die eine oder mehrere Doppelbindungen enthalten, oder von deren Gemischen, dadurch gekennzeichnet, daß einem Reaktor gleichzeitig mit einer wäßrigen Lösung der Monomeren eine mit dieser Lösung unmischbare bzw. teilweise mischbare Trennflüssigkeit am Reaktoreingang zugeführt wird, wobei sich die Trennflüsigkeit im Verlauf der Polymerisation selbständig zwischen Reaktorinnenwand und Polymerphase verteilt, und die entstandenen Polymeren gemeinsam mit der Trennflüssigkeit am Reaktorausgang ausgetragen werden.

2. Verfahren nach Anspruch 1, dadurch gekennzeichnet, daß die Trennflüssigkeit mit der wäßrigen Monomerlösung unmischbar ist.

3. Verfahren nach Anspruch 2, dadurch gekennzeichnet, daß als Trennflüssigkeit Butylstearat, Butyloleat oder Siliconöl zugeführt wird.

4. Verfahren nach einem der Ansprüche 1 bis 3, dadurch gekennzeichnet, daß 0,01 bis 0,8 Gew.% Trennflüssigkeit, bezogen auf das Gewicht der eingesetzten Monomerlösung, zugeführt wurden.

5. Verfahren nach einem der Ansprüche 1 bis 4, dadurch gekennzeichnet, daß als Monomere Acrylsäure, deren Salze oder deren Derivate verwendet werden.

6. Verfahren nach einem der Ansprüche 1 bis 5, dadurch gekennzeichnet, daß Monomerlösung und Trennflüssigkeit am oberen Ende eines senkrecht stehenden, zylindrischen Rohrreaktors kontinuierlich eingespeist werden, die Monomeren im Verlaufe des Durchganges durch den Rohrreaktor von oben nach unten zu einem hochviskosen, gelartigen Polymerblock polymerisiert werden, wobei sich die Trennflüssigkeit zwischen Reaktorinnenwand und Polymerblock verteilt, und Polymerblock mit Trennflüssigkeit am unteren Ende des Rohrreaktors kontinuierlich abgezogen werden.

**Claims**

1. Process for the continuous preparation of liquid-absorbing, crosslinked, water-insoluble polymers by polymerization of water-soluble monomers which contain one or more double bonds or of mixtures thereof, characterized in that a reactor is fed simultaneously at the inlet with an aqueous solution of the monomers and a release liquid which is immiscible or only partially miscible with this solution, and the release liquid becomes independently distributed in the course of the polymerization between the inner wall of the reactor and the polymer phase, and the resulting polymers are discharged together with the release liquid at the reactor outlet.

2. Process according to Claim 1, characterized in that the release liquid is immiscible with the aqueous monomer solution.

3. Process according to Claim 2, characterized in that the release liquid added is butyl stearate, butyl oleate or silicone oil.

4. Process according to one of Claims 1 to 3, characterized in that 0.01 to 0.8% by weight of release liquid, relative to the weight of monomer solution used, is added.

5. Process according to one of Claims 1 to 4, characterized in that the monomers used are acrylic acid, salts thereof or derivatives thereof.

6. Process according to one of Claims 1 to 5, characterized in that the monomer solution and release liquid are continuously introduced at the top of a vertical cylindrical tubular reactor, the monomers are polymerized as they pass through the tubular reactor in a downwards direction to form a highly viscous, gel-like polymer mass, the release liquid becoming distributed between the inner wall of the reactor and the polymer mass, and the polymer mass with the release liquid are continuously withdrawn at the base of the tubular reactor.

**Revendications**

1. Procédé pour la préparation continue de polymères réticulés insolubles dans l'eau absorbant les liquides par polymérisation de monomères solubles dans l'eau qui contiennent une ou plusieurs doubles liaisons, ou de leurs mélanges, caractérisé en ce qu'en même temps qu'une solution aqueuse des monomères est admise au réacteur, un liquide de séparation non miscible ou partiellement miscible avec cette solution est admis à l'entrée du réacteur, le liquide de séparation se répartissant spontanément au cours de la polymérisation entre la paroi intérieure du réacteur et la phase polymère, et les polymères formés sont extraits à la sortie du réacteur conjointement avec le liquide de séparation.

2. Procédé suivant la revendication 1, caractérisé en ce que le liquide de séparation est non miscible avec la solution aqueuse de monomères.

3. Procédé suivant la revendication 2, caractérisé en ce que le stéarate de butyle, l'oléate de butyle ou l'huile de silicone est admis comme liquide de séparation.

4. Procédé suivant l'une quelconque des revendications 1 à 3, caractérisé en ce que le liquide de séparation est admis en quantité de 0,01 à 0,8% en poids, sur la base du poids de la solution de monomères utilisée.

5. Procédé suivant l'une quelconque des revendications 1 à 4, caractérisé en ce que l'acide acrylique, ses sels ou ses dérivés sont utilisés comme monomères.

6. Procédé suivant l'une quelconque des revendications 1 à 5, caractérisé en ce que la solution de monomères et le liquide de séparation sont admis de façon continue à la partie supérieure d'un réacteur tubulaire cylindrique vertical, les monomères subissent la polymérisation pendant le passage dans le réacteur de haut en bas en un bloc de polymère gélifié hautement visqueux tandis que le liquide de séparation se répartit entre la paroi intérieure du réacteur et le bloc de polymère, et le bloc de polymère et le liquide de séparation sont extraits de façon continue à l'extrémité du réacteur tubulaire.